# FASCICULE DE BREVET EUROPEEN

(11) **EP 0 765 777 B1**
(45) Date de publication et mention de la délivrance du brevet: **13.05.1998**
(21) Numéro de dépôt: 96470018.1
(22) Date de dépôt: 11.09.1996
(51) Int. Cl.: B60N 2/08

(54) **Glissière verrouillable en position pour sièges de véhicules automobiles**
Verriegelbarer Schieber für Kraftfahrzeugsitze
Lockable slide for motor vehicle seats

(30) Priorité: 26.09.1995 FR 9511424
(43) Date de publication de la demande: 02.04.1997
(73) Titulaire: BERTRAND FAURE EQUIPEMENTS S.A., 92641 Boulogne Cedex (FR)
(72) Inventeur: Couasnon, Christian, 57000 Metz (FR)
(74) Mandataire: Schmit, Christian Norbert Marie

(56) Documents cités:
- EP-A- 0 117 131
- CH-A- 404 419
- FR-A- 630 833
- GB-A- 413 397
- US-A- 2 636 545
- PATENT ABSTRACTS OF JAPAN vol. 010, no. 200 (M-498), 12 Juillet 1986 & JP-A-61 044037 (NISSAN MOTOR CO LTD), 3 Mars 1986,

## Description

La présente invention concerne une glissière verrouillable en position, pour des sièges de véhicules automobiles, notamment des sièges avant. Ces sièges sont montés sur glissière pour permettre leur réglage en position longitudinale et ils doivent pouvoir être verrouillés, quelle que soit leur position de réglage, pour éviter tout déplacement longitudinal.

On connaît déjà différents systèmes de verrouillage, couramment basés sur le principe de la mise en prise d'un verrou lié à la partie mobile de la glissière, cette partie mobile étant fixée au siège, avec des crans aménagés sur la partie fixe, solidaire du plancher du véhicule. Le verrou est classiquement maintenu en position verrouillée, en prise avec les dits crans, par des moyens de rappel élastique, le déverrouillage étant commandé par un levier dont la manoeuvre permet de dégager le verrou des crans et autorise ainsi le coulissement de la glissière et son réglage en position

On connaît ainsi, notamment par le document EP-A-117131, des glissières formées d'un profilé mâle et d'un profilé femelle coulissant l'un dans l'autre. Le profilé mâle, ayant une section de forme générale en "U" comporte sur un coté, formant une branche du "U", une série de crans dans lesquels s'engagent, en position de verrouillage, des dents ou créneaux d'un verrou lié au profilé femelle. Ce verrou est monté pivotant autour de sa partie centrale sur un arbre d'axe parallèle à la direction de coulissement et maintenu par un support sur le fond du profilé femelle. Un coté du verrou pénètre à l'intérieur de la glissière à travers une ouverture ménagée dans le fond du U formant le profilé femelle et porte à son extrémité les dites dents, orientées selon une direction perpendiculaire au côté du profilé mâle comportant les crans de verrouillage, les dents se déplaçant donc sensiblement selon cette direction lors de la rotation du verrou. Un premier ressort de rappel maintient le verrou en position de verrouillage. Le déverrouillage est assuré par un levier articulé sur un tourillon fixé sur le coté du profilé femelle. Ce levier comporte une patte coopérant avec l'autre extrémité du verrou, située à l'extérieur de la glissière, pour faire pivoter le verrou à l'encontre du ressort de rappel et dégager ses dents des crans du profilé mâle. Ce levier est rappelé en position par un deuxième ressort de rappel.

L'inconvénient de ce système réside dans la présence de nombreuses pièces (support, arbre d'articulation, ressorts), ce qui complique le montage et en augmente le coût.

On connaît également par le document JP-A-61044037 (correspondant au préambule de la revendication indépendante) un système de verrouillage dans lequel le verrou est formé d'une lame élastique qui est fixée à une extrémité sur le fond d'un profilé, s'étend vers l'extérieur de la glissière, est repliée à angle droit et comporte à son autre extrémité des trous qui s'engagent, en position verrouillée, sur des crans d'une plaque fixée sous le deuxième profilé. Mais d'une part, cette lame étant déformable, elle peut fléchir ou se tordre lorsque des efforts importants tendent à faire coulisser les profilés l'un par rapport à l'autre, et d'autre part ce système augmente l'encombrement de la glissière et, étant apparent à l'extérieur de celle-ci, est peu esthétique.

La présente invention vise notamment à améliorer la résistance et la fiabilité et donc la sécurité du verrouillage d'un tel système de verrouillage comportant un verrou élastiquement déformable. Elle vise également à simplifier la réalisation des systèmes de verrouillage décrits précédemment, en réduisant le nombre de pièces nécessaires, et sans accroître l'encombrement des glissières.

Avec ces objectifs en vue, l'invention a pour objet une glissière pour siège de véhicule, du type comportant un premier et un deuxième profilés coulissants l'un par rapport à l'autre selon une direction longitudinale et un verrou de blocage longitudinal pourvu de dents de verrouillage qui coopèrent avec des crans ménagés sur le deuxième profilé pour assurer le verrouillage et qui peuvent être dégagées des dits crans par un déplacement selon une direction perpendiculaire à la dite direction longitudinale, le verrou étant fixé rigidement sur le premier profilé dans une zone de fixation éloignée des dites dents et étant élastiquement déformable dans une zone intermédiaire située entre la zone de fixation et les dents. Selon l'invention, la glissière est caractérisée en ce que les dents passent dans une ou plusieurs fenêtres ménagées dans une aile du premier profilé, située à proximité directe des crans du deuxième profilé.

Ainsi, en position verrouillée, les contraintes générées dans le verrou par des efforts tendant à faire coulisser les profilés l'un par rapport à l'autre sont pratiquement uniquement des contraintes de cisaillement localisées au niveau des dents.

Par ailleurs, le montage du verrou ne nécessite aucune pièce d'articulation ni de ressort de rappel supplémentaire. Le pivotement du verrou pour dégager ses dents des crans du second profilé est obtenu par la déformation élastique de la partie intermédiaire, et c'est l'élasticité de cette partie qui assure le rappel en position de verrouillage.

Préférentiellement, le verrou est formé d'une seule pièce constituée d'une lame en matériau élastique, par exemple en acier à ressort. Les dents de verrouillage sont ainsi réalisées directement dans cette lame, ce qui facilite grandement la fabrication du verrou. De plus, la dite lame est placée à l'intérieur de la glissière. De la sorte, les organes de verrouillage sont protégés par la glissière et l'encombrement du système de glissières est limité au profil externe de celles-ci.

Selon un premier mode de réalisation, le verrou comporte un corps de verrou portant les dents et la dite zone intermédiaire élastiquement déformable est formée de deux pattes qui s'étendent latéralement de part et d'autre du corps et qui sont fixées par leurs extrémités distantes du corps sur le premier profilé, le pivotement s'effectuant alors par une torsion des dites pattes.

Le déverrouillage est alors préférentiellement effectué en agissant, par des moyens de commande tels que palonnier ou câble de traction, sur une languette réalisée d'une seule pièce avec le verrou et qui s'étend à partir de l'extrémité du corps de verrou opposée aux dents.

Selon un deuxième mode de réalisation, le verrou comporte un corps de verrou portant les dents et la dite zone élastiquement déformable est formée par une patte qui s'étend à partir du dit corps à l'opposé des dents et qui est fixée par son extrémité sur le premier profilé, le pivotement s'effectuant alors par une flexion de la dite patte.

Dans ce cas, les moyens de commande agissent directement sur le corps de verrou et peuvent par exemple être constitués d'une came montée pivotante sur le premier profilé.

D'autres caractéristiques et avantages de l'invention apparaîtront dans la description qui va suivre.

On se reportera aux dessins annexés dans lesquels :
- la figure 1 est une vue en perspective d'une glissière conforme au premier mode de réalisation, c'est-à-dire avec le verrou fixé par des pattes latérales, et dans une première variante utilisant une commande de déverrouillage par palonnier ;
- la figure 2 est une vue de détail du verrou ;
- la figure 3 est une vue en coupe transversale, au niveau du verrou, de la glissière de la figure 1 ;
- la figure 4 est une vue de détail en coupe des dents de verrouillage ;
- la figure 5 est une vue similaire à celle de la figure 1, dans une deuxième variante de réalisation avec commande de déverrouillage par câble ;
- la figure 6 est une vue en perspective de la lame formant verrou dans cette deuxième variante ;
- la figure 7 est une vue en coupe transversale de la glissière de la figure 5 ;
- la figure 8 est une vue en perspective d'une glissière selon une troisième variante de réalisation ;
- la figure 9 est une vue en perspective de la lame formant verrou dans cette troisième variante ;
- la figure 10 est une vue en coupe transversale de la glissière de la figure 8 ;
- la figure 11 représente une autre forme de réalisation du verrou utilisable dans la troisième variante ;
- la figure 12 est une vue de détail des dents du verrou en position de verrouillage ;
- la figure 13 est une vue latérale avec arraché d'une glissière selon le deuxième mode de réalisation, c'est à dire avec une lame déformable en flexion et une commande de déverrouillage par came pivotante ;
- la figure 14 est une vue en perspective de la glissière de la figure 13 ;
- la figure 15 est une vue en perspective de la lame formant verrou dans ce deuxième mode de réalisation;
- la figure 16 est une vue en coupe transversale de la glissière des figures 13 et 14 ;

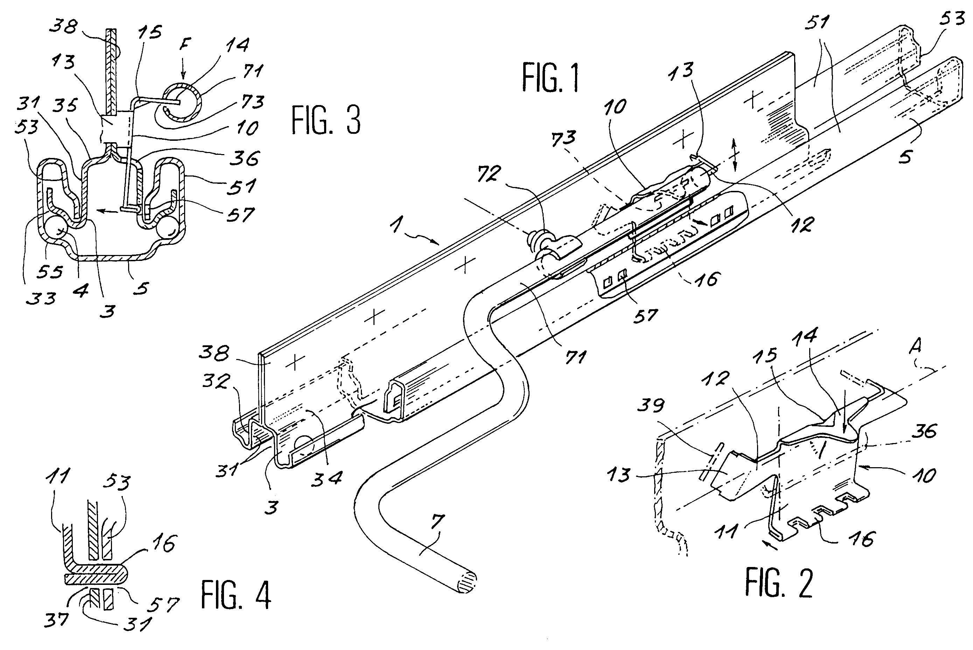

La glissière 1 représentée à la figure 1 est formée d'un profilé mâle 3 coulissant dans un profilé femelle 5. Un siège est classiquement pourvu de deux telles glissières. Les profilés femelles 5 sont prévus pour être fixés sur le plancher d'un véhicule, et l'armature du siège, non représentée, est fixée sur les profilés mâles 3. Un palonnier de commande 7, partiellement représenté, est prévu pour assurer le déverrouillage des glissières et permettre le réglage de la position du dit siège. Comme on le verra par la suite, le déverrouillage peut aussi être assuré par d'autres moyens, par exemple une poignée disposée latéralement sur un coté d'une glissière ou un système de commande par câble.

Dans les différentes variantes qui vont être décrites, les glissières sont réalisées de manière similaire pour ce qui concerne leur fonction de coulissement et de positionnement. Le profilé femelle 5 a une section de forme générale en U ouvert vers le haut, comportant deux ailes 51 repliées l'une vers l'autre et se terminant par un retour en forme de crochet 53 tourné vers l'intérieur du profilé et vers le bas.

Le profilé mâle 3 a aussi une section de forme générale en U, ouvert vers le bas. Les ailes 31 de ce U se prolongent, vers l'extérieur et vers le haut, par un retour profilé 33 qui s'engage sous le retour en forme de crochet 53 du profilé femelle. Les retours profilés 33 et les angles intérieurs arrondis 55 entre le fond du U du profilé femelle et ses ailes 51 constituent des chemins de roulement pour des billes 4 qui y sont interposées, pour faciliter le coulissement relatif des profilés 3, 5. Des crans 57 sont formés sur les bords d'extrémité des retours en forme de crochet 53, en étant régulièrement espacés sur au moins une partie de la longueur du profilé femelle 5, les dits bords d'extrémité jouxtant les ailes 31 du profilé mâle dans le creux formé entre chacune des dites ailes et le retour profilé 33 correspondant.

La description qui précède s'applique aux divers modes de réalisation et variantes des glissières conformes à l'invention. La forme de la section des profilés et leur agencement relatif, en vue du coulissement d'un profilé par rapport à l'autre, pourront être modifiés sans pour autant sortir du cadre de la présente invention.

En se référant spécifiquement aux figures 1 à 4, on va maintenant décrire le système de verrouillage utilisé dans la première variante du premier mode de réalisation des glissières.

Le profilé mâle est formé de deux éléments 32, 34 de même profil, disposés symétriquement par rapport à un plan médian longitudinal vertical et assemblés entre eux par une partie de bord pour former une aile supérieure 38 qui s'étend verticalement vers le haut à partir du fond 35 du dit profilé.

Une fenêtre 36 est ménagée dans le fond 35 du profilé mâle 3, à travers laquelle passe un verrou 10. Le verrou 10 est constitué d'une lame en matériau élastiquement flexible et ayant une bonne résistance mécanique, notamment au cisaillement, par exemple en acier à ressort. Il comporte un corps de verrou 11 qui s'étend verticalement à travers la fenêtre 36, avec un jeu suffisant pour permettre le pivotement du verrou pour le déverrouillage de la glissière, comme on le verra par la suite. Le corps de verrou porte sur son bord inférieur, situé à l'intérieur de la glissière, des dents de verrouillage 16 qui s'étendent perpendiculairement au corps, et donc sensiblement horizontalement. Comme on le voit mieux sur les dessins des figures 2 et 4, les dents 16 sont découpées sur le bord inférieur de la lame formant le verrou, pliées à angle droit par rapport au corps de verrou, et repliées sur elles mêmes pour renforcer leur résistance au cisaillement.

Les dents 16 passent dans une seconde fenêtre 37 réalisée dans une des ailes 31 du profilé mâle, avec un jeu minimal dans la direction longitudinale des glissières, et s'insèrent, en position de verrouillage, dans les crans 57 du profilé femelle.

Ainsi, dans la position de verrouillage de la glissière, telle que représentée notamment figure 4, les efforts tendant à faire coulisser le profilé mâle dans le profilé femelle sont transmis directement du profilé mâle aux dents 16 (par les bords latéraux de la fenêtre 37) et de celles-ci aux crans 57 du profilé femelle et, du fait de la proximité directe des dits crans avec les ailes 31 du profilé mâle, se traduisent par des contraintes dans la lame qui sont uniquement des contraintes de cisaillement. Les autres parties du verrou 10 ne subissent donc aucune contrainte lorsque de tels efforts s'exercent et, en conséquence, les dimensions et le poids du verrou peuvent être particulièrement réduits.

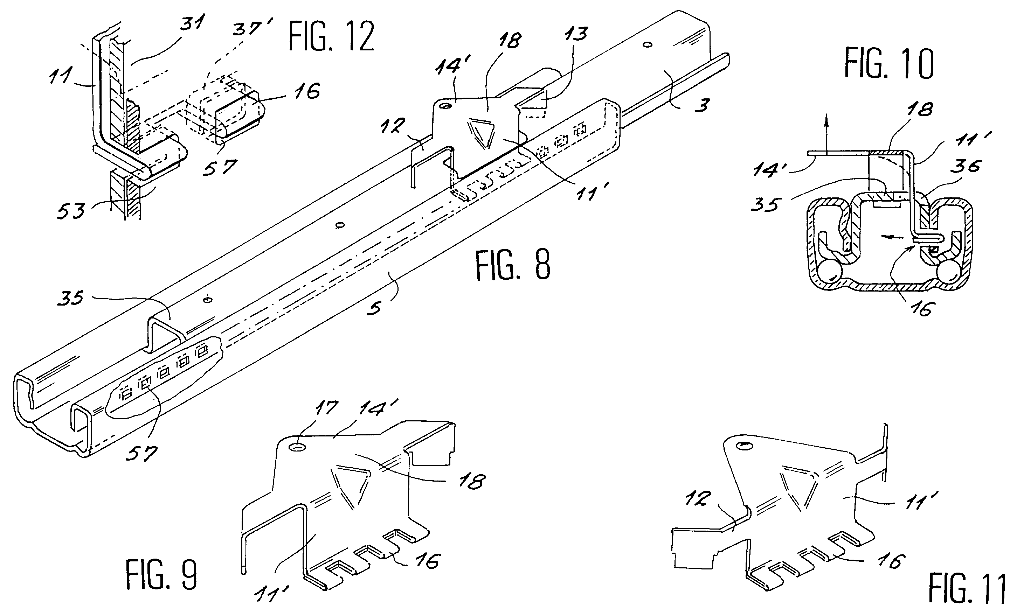

Dans une autre forme de réalisation, représentée figure 12, la fenêtre 37 à travers laquelle passe l'ensemble des dents peut être remplacée par une pluralité de fenêtres 37' correspondant respectivement à chaque dent du verrou. Dans ce cas, les efforts de cisaillement entre le profilé mâle et le verrou sont supportés par toutes les dents.

Le verrou comporte, dans sa partie supérieure située au dessus du fond 35 du profilé mâle, deux pattes 12 qui s'étendent latéralement de part et d'autre du corps 11, dans le plan de ce dernier. Les extrémités 13 des pattes 12 sont repliées sensiblement perpendiculairement à ce plan et fixées sur l'aile supérieure 38 du profilé mâle, par exemple en les insérant dans des lumières 39 réalisées dans la dite aile 38 et en matant ou en repliant les bords extrêmes des pattes de l'autre coté de l'aile 38 pour assurer la solidarisation du verrou sur le profilé mâle.

Une languette 14 s'étend à partir du bord supérieur du corps de verrou 11, sensiblement perpendiculairement à ce dernier et du même coté que les dents par rapport au plan général du corps de verrou, et un raidisseur 15 est formé pour garantir la rigidité de cette languette par rapport au corps de verrou.

Pour déverrouiller les glissières et permettre le réglage longitudinal du siège, le système de glissières comporte des moyens de déverrouillage constitués, selon la première variante de réalisation, par un palonnier 7 formé par exemple d'un tube cintré en U dont chaque branche 71 s'étend à proximité de l'aile supérieure 38 du profilé mâle 3 et y est maintenue par un pivot 72, par exemple en matière plastique. Une fente 73 est réalisée dans la paroi du tube à proximité de l'extrémité de la branche 71 et la languette 14 du verrou 10 est partiellement insérée dans la fente 73 avec un jeu le plus réduit possible, qui peut être pratiquement supprimé grâce à la forme triangulaire, visible sur les figures, de la dite languette et à l'élasticité du palonnier.

Le déverrouillage de la glissière s'effectue en tirant le palonnier vers le haut, ce qui provoque un pivotement de l'extrémité de la branche 71 vers le bas. L'effort vertical F ainsi exercé sur la languette 14 fait pivoter le verrou autour d'un axe situé au niveau des pattes 12 et provoque ainsi le dégagement des dents 16 hors des crans 57, comme représenté figure 3. Les dimensions de la fenêtre 36 et la distance entre le corps de verrou et l'aile supérieure 38 du profilé mâle sont déterminées de manière que le verrou puisse avoir un débattement suffisant pour permettre le dégagement des dents hors des crans 57.

La torsion, ainsi provoquée, des dites pattes crée un couple de rappel élastique du verrou en position de verrouillage dés que le palonnier est relâché.

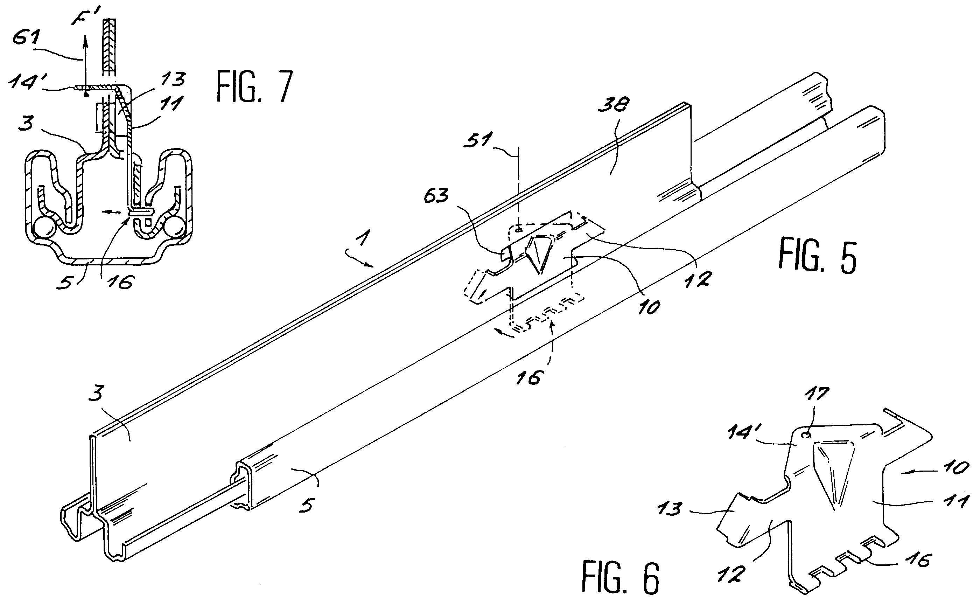

Dans la deuxième variante, représentée figures 5 à 7, le verrouillage de la glissière est assuré de la même manière que dans la première variante. Le corps de verrou et sa fixation sur le profilé mâle sont également identiques. Seule la languette 14' est dirigée en sens opposé par rapport à la première variante, c'est à dire qu'elle s'étend ici de l'autre coté des dents par rapport au plan général du corps de verrou. La languette 14' passe librement dans une lumière 63 de l'aile supérieure 38 du profilé mâle et comporte un perçage 17 servant de point d'attache pour des moyens de déverrouillage par traction 61, tels que un câble ou une tirette de déverrouillage. C'est alors la traction F' exercée sur la languette 14' qui provoque le pivotement du verrou pour le déverrouillage.

Dans la troisième variante, représentée figures 8 à 11, le profilé mâle 3 est formé en une seule partie et présente alors un fond 35 plat sur lequel le verrou est fixé. Dans ce cas, le corps de verrou 11' est lui même plié sensiblement à angle droit, sa partie supérieure 18, prolongée par la languette 14', s'étendant dans un plan horizontal parallèle au fond 35. Les pattes 12 s'étendent dans le même plan horizontal et leurs extrémités sont repliées vers le bas et fixées sur le fond 35 de même manière que pour les deux premières variantes.

Le dessin de la figure 11 représente une autre forme de réalisation du verrou également adaptée pour le fixer sur le fond du profilé mâle. Cette forme est similaire à celle du verrou utilisé dans la deuxième variante, à l'exception des extrémités des pattes qui sont conformées pour être fixées sur le fond du profilé mâle.

On notera que préférentiellement, comme représenté dans les différentes variantes du premier mode de réalisation décrites ci-dessus, les extrémités des pattes sont repliées obliquement par rapport à la direction dans laquelle s'étendent les pattes 12. Il s'ensuit que les dites pattes présentent un bord plus court que l'autre. Lors de la déformation de torsion des pattes, c'est donc vers le bord le plus long que la déformation est maximale, l'axe de pivotement étant situé du coté où les pattes sont les plus courtes, donc plus rigides. Cette disposition permet donc de positionner l'axe A de pivotement (voir figure 2) de manière la plus adéquate.

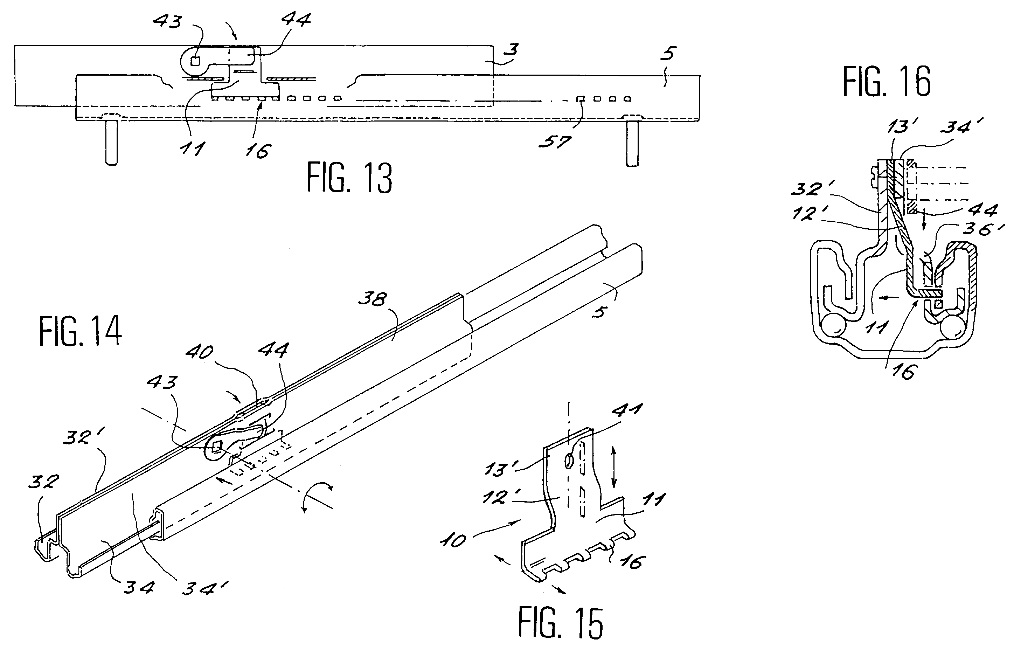

En relation avec les figures 13 à 16 on va maintenant décrire le deuxième mode de réalisation dans lequel le pivotement du corps de verrou et son rappel élastique en position de verrouillage sont assurés par une flexion élastique de la lame constituant le verrou.

Dans ce deuxième mode de réalisation, le profilé mâle 3 est constitué, comme dans les deux premières variantes illustrées figures 1 et 5, de deux éléments symétriques 32, 34 dont les bords supérieurs 32', 34' sont assemblés l'un contre l'autre par exemple par soudage et constituent l'aile supérieure 38 du profilé mâle. Le corps de verrou 11 passe à travers la fenêtre 36' qui est ménagée dans le fond du profilé mâle et qui se prolonge sur une partie du bord supérieur de l'un des éléments constituant le dit profilé mâle. Le corps de verrou 11 se prolonge vers le haut, du coté opposé aux dents 16, par une patte 12' dont l'extrémité supérieure 13' est décalée latéralement par rapport à la partie inférieure du corps de verrou. La patte 12' s'étend donc obliquement par rapport à son extrémité fixe 13', comme on le voit bien figure 16.

L'extrémité 13' de la patte 12' est maintenue rigidement sur le profilé mâle en étant insérée dans un évidement 40 obtenu au niveau du plan de joint des bords des deux éléments 32, 34 par un emboutissage en creux de ces bords, et elle y est retenue par exemple par une semi-découpe d'un des dits éléments qui pénètre dans un perçage 41 réalisé à cet effet dans l'extrémité de la patte.

Lorsque la lame constituant le verrou est ainsi fixée sur le profilé mâle, sans subir de contraintes de déformation élastique, les dents 16 pénètrent dans les crans 57 du profilé femelle pour assurer le verrouillage, comme indiqué dans les autre modes de réalisations.

Une came 43 est montée, pivotante selon un axe transversal à la glissière, sur l'aile supérieure 38 du profilé mâle 3, à proximité du verrou. La pointe 44 de la came s'étend parallèlement à la dite aile 38, à l'aplomb de la patte 12'. Lorsque l'on fait pivoter la came 43, par exemple par un carré de manoeuvre muni d'une poignée de commande disposée sur le coté du siège (non représentés), la pointe 44 vient appuyer sur la patte 12' et, du fait de l'obliquité de cette dernière, repousse le corps de verrou 11 horizontalement vers l'intérieur de la glissière en faisant fléchir élastiquement la patte 12', et provoque le déverrouillage en dégageant les dents 16 hors des crans 57. Lors du retour de la came dans sa position d'origine, provoqué par exemple, de manière connue en soi, par un ressort de torsion monté sur le carré de manoeuvre, le verrou est rappelé élastiquement en position de verrouillage.

Les crans 57 du profilé femelle pourraient aussi, au lieu d'être constitués de trous découpés dans le retour 53 de l'aile du profilé femelle, être constitués sous forme de créneaux réalisés directement au bord de ce retour.

## Revendications

1. Glissière (1) pour siège de véhicule, du type comportant un premier (3) et un deuxième (5) profilés coulissants l'un par rapport à l'autre selon une direction longitudinale et un verrou (10) de blocage longitudinal pourvu de dents de verrouillage (16) qui coopèrent avec des crans (57) ménagés sur le deuxième profilé (5) pour assurer le verrouillage et qui peuvent être dégagées des dits crans par un déplacement selon une direction perpendiculaire à la dite direction longitudinale, le verrou étant fixé rigidement sur le premier profilé (3) dans une zone de fixation (13) éloignée des dites dents et étant élastiquement déformable dans une zone intermédiaire (12) située entre la zone de fixation et les dents, caractérisée en ce que les dents (16) passent dans une ou plusieurs fenêtres (37, 37') ménagées dans une aile (31) du premier profilé (3), située à proximité directe des crans du deuxième profilé.

2. Glissière selon la revendication 1, caractérisée en ce que le verrou (10) est formé d'une seule pièce constituée d'une lame en matériau élastique, par exemple en acier à ressort.

3. Glissière selon la revendication 1, caractérisée en ce que le verrou (10) comporte un corps de verrou (11) portant les dents (16) et la dite zone intermédiaire élastiquement déformable est formée de deux pattes (12) qui s'étendent latéralement de part et d'autre du corps et qui sont fixées par leurs extrémités (13) distantes du corps sur le premier profilé (3), le pivotement du verrou s'effectuant par une torsion des dites pattes.

4. Glissière selon la revendication 3, caractérisée en ce qu'elle comporte des moyens de déverrouillage agissant sur une languette (14) réalisée d'une seule pièce avec le verrou et qui s'étend à partir de l'extrémité du corps de verrou opposée aux dents.

5. Glissière selon la revendication 4, caractérisée en ce que les moyens de déverrouillage comportent un palonnier (7) articulé sur le premier profilé (3) et la languette (14) est insérée dans une fente (73) réalisée dans le dit palonnier.

6. Glissière selon la revendication 4, caractérisée en ce qu'elle comporte des moyens de déverrouillage par traction (61) attachés sur la languette (14).

7. Glissière selon la revendication 1, caractérisée en ce que le verrou comporte un corps de verrou (11) portant les dents (16) et la dite zone élastiquement déformable est formée par une patte (12') qui s'étend à partir du dit corps à l'opposé des dents et qui est fixée par son extrémité (13') sur le premier profilé (3), le pivotement du verrou s'effectuant par une flexion de la dite patte.

8. Glissière selon la revendication 7, caractérisée en ce qu'elle comporte des moyens de commande de déverrouillage comportant une came (43) montée pivotante sur le premier profilé (3) et dont la pointe (44) agit sur la patte (12') pour faire pivoter le verrou.

9. Glissière selon la revendication 7, caractérisée en ce que l'extrémité (13') de la patte (12') est maintenue sur le premier profilé (3) en étant insérée dans un évidement (40) ménagée dans une aile supérieure (38) du premier profilé.

10. Glissière selon l'une quelconque des revendications 3 à 6, caractérisée en ce que les extrémités (13) des pattes sont repliées obliquement.

## Claims

1. Runner (1) for a vehicle seat, of the type having first (3) and second (5) profiled members sliding with respect to each other in a longitudinal direction and a longitudinal clamping latch (10) provided with locking teeth (16) which cooperate with notches (57) formed on the second profiled member (5) in order to ensure locking and which can be disengaged from the said notches by a movement in a direction perpendicular to the said longitudinal direction, the latch being fixed rigidly on the first profiled member (3) in a fixing zone (13) distant from the said teeth and being elastically deformable in an intermediate zone (12) situated between the fixing zone and the teeth, characterised in that the teeth (16) pass through one or more apertures (37, 37') formed in a flange (31) on the first profiled member (3), situated in the direct vicinity of the notches on the second profiled member.

2. Runner according to Claim 1, characterised in that the latch (10) is formed in a single piece consisting of a blade made of elastic material, for example spring steel.

3. Runner according to Claim 1, characterised in that the latch (10) has a latch body (11) carrying the teeth (16) and the said elastically deformable intermediate zone is formed by two lugs (12) which extend laterally on each side of the body and which are fixed to the first profiled member (3) by their ends (13) distant from the body, pivoting of the latch being effected by a twisting of the said lugs.

4. Runner according to Claim 3, characterised in that it has unlocking means acting on a tongue (14) produced in a single piece with the latch and which extends from the end of the latch body opposite to the teeth.

5. Runner according to Claim 4, characterised in that the unlocking means include a bar (7) articulated on the first profiled member (3) and the tongue (14) is inserted in a slot (73) produced in the said bar.

6. Runner according to Claim 4, characterised in that it has means of unlocking by traction (61) attached to the tongue (14).

7. Runner according to Claim 1, characterised in that the latch has a latch body (11) carrying the teeth (16) and the said elastically deformable zone is formed by a lug (12') which extends from the said body opposite to the teeth and which is fixed by its end (13') to the first profiled member (3), pivoting of the latch being effected by a bending of the said lug.

8. Runner according to Claim 7, characterised in that it has unlocking control means including a cam (43) mounted so as to pivot on the first profiled member (3) and whose tip (44) acts on the lug (12') in order to cause the latch to pivot.

9. Runner according to Claim 7, characterised in that the end (13') of the lug (12') is held on the first profiled member (3), being inserted in a recess (40) formed in a top flange (38) of the first profiled member.

10. Runner according to any one of Claims 3 to 6, characterised in that the ends (13) of the lugs are folded obliquely.

## Patentansprüche

1. Schiene (1) für Fahrzeugsitze, mit einem ersten (3) und einem zweiten (5) Profil, die relativ zueinander entlang einer Längsrichtung gleiten, und das einen Riegel (10) umfaßt, der längs blockiert und mit Verriegelungszähnen (16) versehen ist, die mit Rastöffnungen (57) zusammenwirken, die an dem zweiten Profil (5) angebracht sind, um die Verriegelung zu sichern, und aus den Rastöffnungen durch eine Verschiebung in senkrechter Richtung zur Längsrichtung befreit werden können, wobei der Riegel starr an das erste Profil (3) in einer Befestigungszone (13) verbunden ist, der einen Abstand zu den Zähnen hat, und in einem Zwischenbereich (12) elastisch verformbar ist, der zwischen dem Befestigungsbereich und den Zähnen angeordnet ist, dadurch gekennzeichnet, daß die Zähne (16) durch ein oder mehrere Fenster (37, 37') durchgehen, die in einem Flügel (31) des ersten Profils (3) angebracht und in unmittelbarer Nähe der Rastöffnungen des zweiten Profils angeordnet sind.

2. Schiene nach Anspruch 1, dadurch gekennzeichnet, daß der Riegel (10) aus einem einzigen Teil gebildet ist, das ein Blatt aus elastischem Material darstellt, wie z.B. Federstahl.

3. Schiene nach Anspruch 1, dadurch gekennzeichnet, daß der Riegel (10) einen Riegelkörper (11) umfaßt, der Zähne (16) trägt, und der elastisch verformbare Zwischenbereich aus zwei Klammern (12) gebildet ist, die sich auf beiden Seiten des Körpers seitlich ausdehnen und ihre vom Körper entfernten Enden (13) an das erste Profil (3) befestigt sind, wobei die Drehung des Riegels durch eine Torsion der genannten Klammern verursacht wird.

4. Schiene nach Anspruch 3, dadurch gekennzeichnet, daß sie Entriegelungsmittel umfaßt, die auf eine Zunge (14) wirken, die mit dem Riegel zusammen aus einem einzigen Teil hergestellt wird und sich vom Ende des Riegelkörpers aus den Zähnen in entgegengesetzter Richtung ausdehnt.

5. Schiene nach Anspruch 4, dadurch gekennzeichnet, daß die Entriegelungsmittel einen Hebel (7) umfassen, der am ersten Profil (3) schwenkbar ist und die Zunge (14) in einen Spalt (73) eingeschoben ist, der im Hebel ausgeführt ist.

6. Schiene nach Anspruch 4, dadurch gekennzeichnet, daß sie Entriegelungsmittel durch Zug (61) umfaßt, der auf die Zunge (14) greift.

7. Schiene nach Anspruch 1, dadurch gekennzeichnet, daß der Riegel einen Riegelkörper (11) umfaßt, der die Zähne (16) trägt, und der elastisch verformbare Bereich durch eine Klammer (12') gebildet wird, die sich vom Körper aus den Zähnen in entgegengesetzter Richtung ausdehnt und durch ihr Ende (13') auf dem ersten Profil (3) befestigt ist, wobei die Drehung des Riegels durch eine Federung der Klammer durchgeführt wird.

8. Schiene nach Anspruch 7, dadurch gekennzeichnet, daß sie Betätigungsmittel für die Entriegelung umfaßt, die einen Exzenter (43) umfassen, der auf dem ersten Profil (3) drehbar gelagert ist und dessen Spitze (44) auf die Klammer (12') wirkt, um den Riegel zum Drehen zu bringen.

9. Schiene nach Anspruch 7, dadurch gekennzeichnet, daß das Ende (13') der Klammer (12') auf dem ersten Profil (3) festgehalten wird, indem es in eine Aussparung (40) eingeschoben wird, die in einem oberen Flügel (38) des ersten Profils angebracht ist.

10. Schiene nach einem der Ansprüche 3 bis 6, dadurch gekennzeichnet, daß die Enden (13) der Klammern schräg gebogen sind.
